# FASCICULE DE BREVET EUROPEEN

(11) **EP 3 648 959 B1**
(45) Date de publication et mention de la délivrance du brevet: **17.06.2026**
(21) Numéro de dépôt: 18734602.8
(22) Date de dépôt: 05.07.2018
(51) Int. Cl.: B29C 70/48, B29C 70/54

(54) **PROCEDE ET OUTILLAGE DE FABRICATION D'UNE PIECE PAR INJECTION DE RESINE DANS UNE PREFORME EN FIBRES TISSEES**
VERFAHREN UND VORRICHTUNG ZUR HERSTELLUNG EINES TEILS DURCH EINSPRITZEN VON HARZ IN EINE GEWEBEFASERVORFORM
METHOD AND EQUIPMENT FOR PRODUCING A PART BY INJECTING RESIN INTO A WOVEN FIBRE PREFORM

(30) Priorité: 07.07.2017 FR 1756425
(43) Date de publication de la demande: 13.05.2020
(73) Titulaire: SAFRAN AIRCRAFT ENGINES, 75015 Paris (FR)
(72) Inventeur: PLANTE, Romain, 77550 Moissy-Cramayel (FR); CORRADINI, Sylvain, 77550 Moissy-Cramayel (FR); TECHER, Marc-Emmanuel, Jean, François, 77550 Moissy-Cramayel (FR)
(74) Mandataire: Gevers & Orès
(86) Numéro de dépôt international: PCT/EP2018/068311
(87) Numéro de publication internationale: WO 2019/008125

(56) Documents cités:
- FR-A1- 3 002 477
- US-A1- 2007 092 379
- US-A1- 2015 343 717

## Description

### DOMAINE TECHNIQUE

La présente invention concerne un procédé et un outillage de fabrication d'une pièce par injection de résine dans une préforme en fibres tissées.

### ETAT DE L'ART

Une pièce, en particulier de turbomachine, telle qu'une aube de soufflante, peut être réalisée par injection d'une résine dans une préforme en fibres tissées. Ce procédé de moulage appelé RTM, acronyme de l'expression anglo-saxonne *Resin Transfer Molding* est un procédé de fabrication bien connu de l'état de la technique consistant à placer une préforme fibreuse comportant au moins une paroi externe de tissu sec dans une cavité étanche d'un outillage, et à remplir cette cavité avec une résine d'imprégnation, généralement une résine époxy.

La paroi externe de la préforme, ou la préforme dans son intégralité, est généralement réalisée par tissage de fibres composites telles que des fibres carbone.

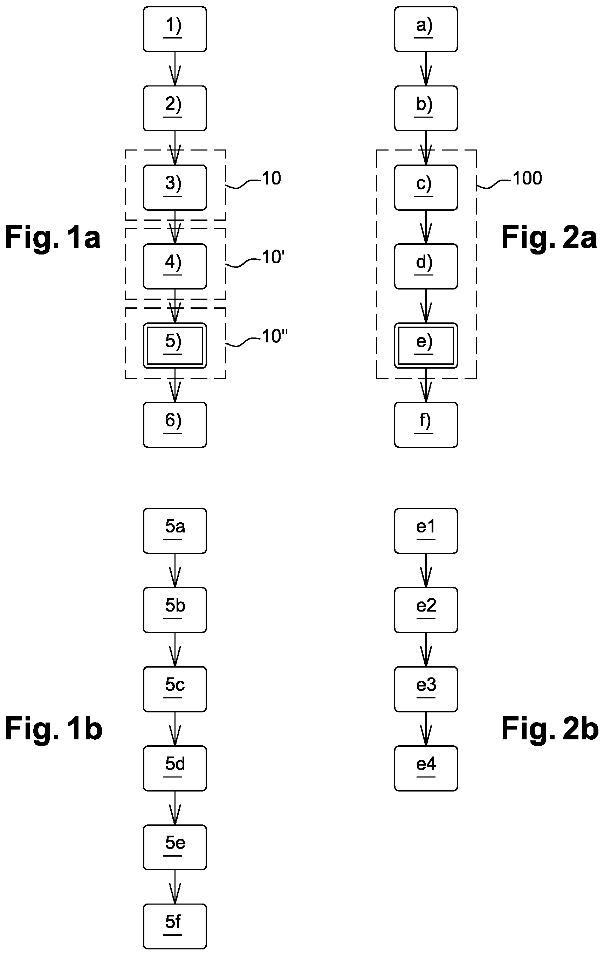

La figure 1a représente les différentes étapes d'un procédé de fabrication d'une pièce du type précité selon la technique actuelle. Le procédé comprend essentiellement six étapes, qui sont :
1) la réalisation de la préforme par tissage en trois dimensions (3D), la préforme de fibres sortant d'un métier à tisser étant plate et foisonnée,
2) la mise aux dimensions de la préforme, par découpe en particulier des flottés,
3) la mise en forme de la préforme, par positionnement de la préforme sur un support de mise en forme, ce support formant un premier outillage 10,
4) le formage de la préforme, par humidification de la préforme et formage dans un moule d'un second outillage 10', et
5) le moulage par injection dans un moule d'un troisième outillage 10".

Dans la technique actuelle, les étapes 3 à 5 propres au procédé RTM sont donc réalisées au moyen de trois outillages distincts, ce qui rend complexe et longue la fabrication d'une pièce par procédé RTM. Une telle configuration est décrite ou évoquée dans les documents US-2015/343.717-A1 et FR-3.002.477-A1.

L'étape 5 de moulage est réalisée de la façon suivante (cf. figure 1b). L'outillage de moulage comprend un moule définissant une première empreinte et un contre-moule définissant une seconde empreinte, les moules et contre-moule étant destinés à être emboîtés l'un dans l'autre pour que leurs empreintes définissent la cavité précitée de réception de la préforme et d'injection de la résine. La préforme est positionnée dans l'empreinte du moule (étape 5a). L'outillage est fermé à l'aide d'une presse en vue du compactage de la préforme dans la cavité (étape 5b). Des canalisations sont branchées à l'outillage et à un piston d'injection de la résine (étape 5c). Le vide est réalisé dans la cavité (étape 5d) et la résine est introduite dans le piston puis injectée par le piston dans la cavité de l'outillage (étape 5e). La presse est chauffée et permet de maintenir la préforme sous pression lors de la polymérisation de la résine (étape 5f). Après refroidissement, l'outillage est ouvert, la pièce est démoulée et l'outillage et les équipements peuvent être nettoyés (étape 6).

Par ailleurs, la technique actuelle présente de nombreux inconvénients.

L'injection de la résine dans la cavité s'effectue avec des équipements extérieurs (piston ou pot à pression, réchauffeur de résine, canalisations, etc.). Ce sont des moyens complexes puisqu'il faut injecter avec des consignes précises en pression, en température et en débit, etc. Il y a de plus un risque de pannes ou d'anomalies élevé. Le pire des scénarios est dangereux : si la résine est chauffée trop longtemps ou trop fort, une exothermie peut faire exploser le piston. Pour chaque injection, il est nécessaire de nettoyer les équipements, c'est une opération longue qui expose les opérateurs à des vapeurs de résine et d'acétone. Les canalisations sont branchées et débranchées, puis jetées pour chaque pièce à fabriquer. Le temps d'installation de l'ensemble de l'outillage est long. Afin d'éviter des pincements lors de la fermeture de l'outillage, on favorise des chemins préférentiels lors du remplissage de la cavité, ce qui complexifie les stratégies d'injection. La perte de matière entraîne un surcoût important et il y a une partie de la résine qui n'est pas distribuée dans la pièce puisqu'elle reste dans les équipements (dans le piston, dans le réchauffeur, dans les canalisations, etc.). Le piston extérieur permettant de générer la pression d'injection a beaucoup de mal à piloter la pression à l'intérieur de la cavité, en particulier au moment où la résine commence à durcir. Dans le cas où la résine polymériserait plus vite dans la canalisation de liaison du piston à la cavité, elle pourrait former un bouchon à l'intérieur de la canalisation et entraîner une injection insuffisante de la résine.

La présente invention propose une solution à au moins une partie des problèmes ci-dessus, qui est simple, efficace et économique.

### EXPOSE DE L'INVENTION

L'invention propose un procédé de fabrication d'une pièce par injection de résine dans une préforme en fibres tissées, comprenant les étapes de :
c) mise en forme de la préforme,
d) formage de la préforme, et
e) injection de résine dans la préforme et moulage,
l'étape e) étant réalisée au moyen d'un outillage comportant un moule, un contre-moule et des moyens d'injection de résine, caractérisé en ce que l'étape e) comprend les sous-étapes de :
   e1) ouverture partielle de l'outillage, en éloignant le moule du contre-moule ou inversement,
   e2) injection de résine dans l'outillage,
   e3) fermeture de l'outillage, en rapprochant le moule du contre-moule ou inversement, et
   e4) mise sous pression et chauffage de la préforme imprégnée entre le moule et le contre-moule.

L'ouverture partielle de l'outillage permet de faciliter l'injection et la distribution de la résine entre le moule et le contre-moule. Une quantité suffisante, et sans excès, de résine peut ainsi être injectée dans l'outillage pour imprégner la préforme et remplir la cavité définie entre le moule et le contre-moule, conformément à la géométrie finale de la pièce.

Avantageusement, lequel lesdites étapes c), d) et e) sont réalisées au moyen dudit outillage, qui est donc l'unique outillage utilisé dans le procédé. Ledit moule définit une empreinte configurée pour mettre en œuvre l'étape c), et l'outillage comporte en outre des moyens d'aspiration d'air et d'injection de résine.

L'invention est particulièrement avantageuse car elle permet de simplifier le procédé de fabrication d'une pièce par RTM, en limitant le nombre d'outillages nécessaire à un seul. Un unique outillage est en effet utilisé pour réaliser les trois étapes précitées, ce qui représente un gain de temps significatif et une réduction des risques de détérioration de la pièce lors de ces déplacements d'un outillage à un autre.

Le procédé selon l'invention peut comprendre une ou plusieurs des caractéristiques ou étapes suivantes, prises isolément les unes des autres ou en combinaison les unes avec les autres :
- le procédé comprend, avant l'étape c), les étapes de :
   a) réalisation de la préforme par tissage de fibres, et
   b) mise aux dimensions de la préforme,
- l'étape c) comprend les sous-étapes d'humidification de la préforme et de positionnement de la préforme dans l'empreinte du moule,
- l'étape d) comprend les sous-étapes de fermeture de l'outillage et de chauffage et mise sous vide de la préforme entre le moule et le contre-moule,
- la sous-étape d'ouverture au moins partielle de l'outillage est réalisée en éloignant d'une distance prédéterminée le contre-moule du moule, le moule et le contre-moule restant sensiblement emboîtés l'un dans l'autre,
- la résine est injectée à travers un port de l'outillage, et le vide est réalisé par aspiration d'air à travers un autre port de l'outillage,
- lesdites étapes sont réalisées au moyen d'un unique outillage.

La présente invention concerne encore un outillage pour la mise en œuvre du procédé selon l'une des revendications précédentes, caractérisé en ce qu'il comprend :
- deux plateaux chauffants respectivement supérieur et inférieur, le plateau chauffant inférieur étant solidaire d'un moule comportant une empreinte de mise en forme d'une préforme et le plateau chauffant supérieur étant solidaire d'un contre-moule comportant une autre empreinte,
- des moyens motorisés de déplacements des plateaux, de préférence dans une direction sensiblement verticale, depuis une position éloignée jusqu'à une position dans laquelle le moule et le contre-moule sont emboîtés l'un dans l'autre, les moyens motorisés étant aptes à appliquer une force de compression aux plateaux en vue de la mise sous pression de la préforme entre les empreintes.

Avantageusement, les deux plateaux font partie d'une presse dont le plateau inférieur forme une embase et le plateau supérieur est monté coulissant en direction sensiblement verticale sur des colonnes de guidage.

L'outillage peut comprendre des moyens de projection laser des contours de la préforme sur l'empreinte du moule.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1a est un schéma bloc représentant des étapes d'un procédé selon la technique antérieure de fabrication d'une pièce en matériau composite,
- la figure 1b est un schéma bloc représentant des étapes d'un procédé selon la technique antérieure de moulage d'une pièce par injection de résine dans une préforme en fibres tissées,
- la figure 2a est un schéma bloc représentant des étapes d'un procédé selon l'invention de fabrication d'une pièce en matériau composite,
- la figure 2b est un schéma bloc représentant des étapes d'un procédé selon l'invention de moulage d'une pièce par injection de résine dans une préforme en fibres tissées,
- la figure 3 est une vue schématique d'un outillage pour la mise en œuvre du procédé des figures 2a et 2b,
- la figure 4 est une vue schématique en perspective des moule et contre-moule de l'outillage de la figure 3, et
- les figures 5 à 7 sont d'autres vues schématiques de l'outillage de la figure 3 et illustrent des étapes du procédé.

### DESCRIPTION DETAILLEE

Les figures 1a et 1b ont été décrits dans ce qui précède et représentent un procédé selon la technique antérieure.

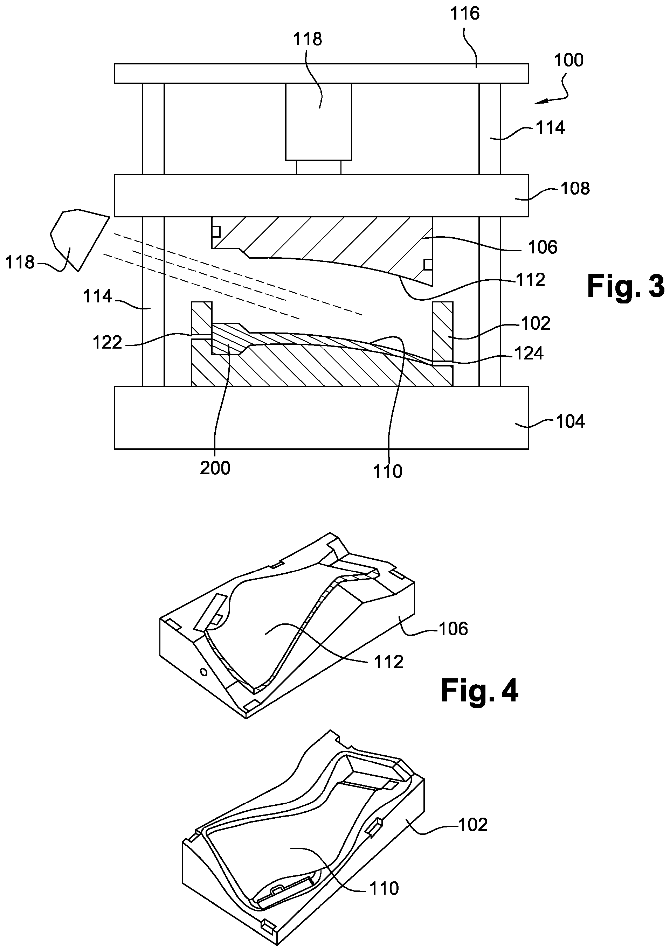

Les figures 2a et 2b illustrent un procédé selon l'invention pour la réalisation d'une pièce en matériau composite, ces étapes étant de préférence réalisées au moyen de l'outillage 100 représenté aux figures 3 et suivantes.

L'outillage 100 comprend pour l'essentiel un moule 102 solidaire d'un plateau inférieur 104, de préférence chauffant, et un contre-moule 106 solidaire d'un plateau supérieur 108, également de préférence chauffant. Des moyens d'étanchéité sont de préférence prévus entre le moule et le contre-moule. Dans l'exemple représenté, le plateau inférieur 104 forme une embase de support de l'outillage, qui peut par exemple reposer sur le sol d'un atelier de fabrication.

Le moule 102 est situé sur une face supérieure du plateau 104 et comprend une empreinte 110, mieux visible à la figure 4. Dans l'exemple représenté, l'empreinte 110 est celle d'une face d'une aube de soufflante, telle que son extrados par exemple. L'empreinte 110 est ici orientée vers le haut et fait face à une empreinte 112 du contre-moule, également mieux visible à la figure 4, le contre-moule 106 étant situé au-dessus du moule et en regard de ce dernier. L'empreinte 112 est ici celle d'une autre face d'une aube de soufflante, telle que son intrados par exemple.

Le plateau 108 est monté coulissant sur des colonnes de guidage 114, ici au nombre de deux, qui s'étendent entre leurs extrémités inférieures reliées au plateau 104 et leurs extrémités supérieures reliées à un mât 116. Le plateau 108 et le contre-moule 106 sont déplacés en translation sensiblement verticale au moyen d'un vérin 118 ou analogue dont un cylindre est fixé au mât 116 et dont un piston est relié au plateau 108.

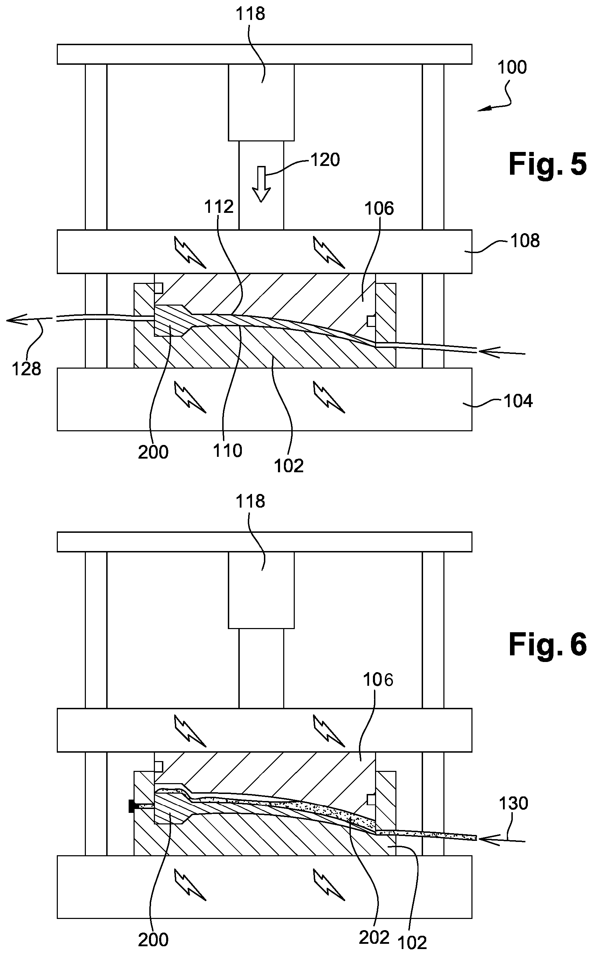

Le plateau 108 et le contre-moule 106 sont mobiles depuis une position supérieure, représentée à la figure 3, dans laquelle l'outillage est ouvert et le moule 102 et le contre-moule 106 sont à distance l'un de l'autre, et une position emboîtée ou rapprochée dans laquelle l'outillage est fermé et le moule et le contre-moule sont engagés l'un dans l'autre, représentée à la figure 5**.** Des positions intermédiaires sont envisageables, telles que la position de la figure 6 dans laquelle l'outillage est ouvert et le moule et le contre-moule sont partiellement désemboîtés l'un de l'autre, le contre-moule étant éloigné d'une distance prédéterminée du moule. L'outillage 100 est également utilisé pour mettre en pression la préforme 200 dans la cavité définie par les empreintes 110, 112, par une force prédéterminée appliquée par le vérin 118 sur le plateau 108 (flèche 120).

L'outillage 100 comprend en outre des moyens de chauffage des plateaux 104, 108, non représentés, ainsi que des moyens de mise sous vide et d'alimentation de la cavité définie par les empreintes 110, 112.

Les moyens de mise sous vide comprennent un premier port 122 localisé par exemple dans le moule et dont une extrémité débouche dans l'empreinte 110. L'autre extrémité de ce port 122 est destinée à être raccordée à des moyens d'aspiration tels qu'une pompe, non représentés.

Les moyens d'alimentation comprennent un second port 124 localisé par exemple dans le moule et dont une extrémité débouche dans l'empreinte 110. L'autre extrémité de ce port 124 est destinée à être raccordée à des moyens d'injection de résine, non représentés.

L'outillage peut en outre comporter des moyens 126 de projection laser notamment du contour de la préforme 200 sur l'empreinte 110 du moule, afin de faciliter son positionnement en début de procédé.

On va maintenant décrire les différentes étapes d'un mode de réalisation du procédé selon l'invention, à partir des figures 2a, 2b, 3, 5 et suivantes.

Une première étape a) du procédé consiste à réaliser une préforme 200 par tissage en trois dimensions au moyen d'un métier à tisser, par exemple du type Jacquard. À la sortie du métier à tisser, la préforme est brute et a une forme générale plate et est foisonnée.

Une étape b) suivante du procédé consiste à mettre aux dimensions la préforme 200, par exemple en découpant ses flottés.

Les étapes a) et b) sont similaires aux étapes 1) et 2) du procédé de la technique antérieure, décrites dans ce qui précède.

L'étape c), ainsi que les étapes suivantes diffèrent des étapes 3) et suivantes de la technique antérieure en ce qu'elles sont mises en œuvre au moyen de l'outillage 100 représenté aux figures 3 et 5 à 7.

La figure 3 illustre l'étape c) qui consiste à mettre en forme la préforme 200. Pour cela, la préforme est de préférence préalablement humidifiée pour la rendre plus malléable. Elle est placée dans l'empreinte 110 du moule 102 à l'aide des moyens de projection laser 126. Ces moyens de projection permettent par exemple de bien positionner des traceurs qui seraient intégrés à la préforme 200 dans des positions prédéfinies.

La figure 5 illustre l'étape d) qui consiste à soumettre la préforme à un formage. Pour cela, l'outillage est fermé et mis en pression, par exemple entre 5 et 10 bars, puis chauffée, par exemple à 100°C, à l'aide des plateaux 104, 108 chauffants et du vérin 118. Un vide résiduel est appliqué dans la cavité recevant la préforme à l'aide des moyens d'aspiration, ce qui permet d'y retirer l'humidité (flèche 128). Lors de cette étape, la préforme est compactée à la géométrie finale souhaitée et séchée par chauffage. La préforme 200 est alors prête pour l'injection.

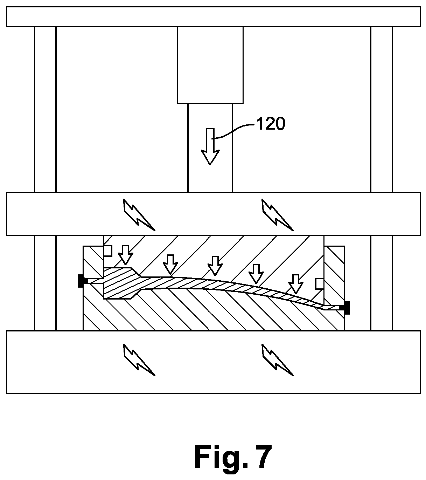

Les figures 6 et 7 illustrent l'étape e) qui consiste à injecter la résine 202 dans la cavité de l'outillage 100. Pour cela, l'outillage est partiellement ouvert (étape e1), le contre-moule étant éloigné du moule d'une distance prédéterminée, comme expliqué dans ce qui précède. Ceci permet l'amenée d'un volume de résine strictement nécessaire pour mouiller la préforme et remplir la géométrie finale de la pièce (respect du taux de fibres). Pendant cette opération d'injection de résine (flèche 130 - étape e2), le moule et le contre-moule sont de préférence chauffés, et la résine aussi.

L'outillage est ensuite fermé (figure 7 - étape e3) et une pression de 3 à 10 bars par exemple est appliquée par le vérin à la préforme 200. La température peut être maintenue à 150°C pendant l'injection et élevée à 180°C pour la polymérisation de la résine. Comme représenté dans le dessin au moyen des flèches, la pression est de préférence maintenue constante sur toute l'étendue de la pièce pendant la polymérisation (étape e4).

La résine utilisée est par exemple une résine époxy telle que celle connue sous la référence CYCOM PR520^{®}, commercialisée par la société CYTEC.

Après polymérisation, l'outillage 100 est ouvert, la pièce 200 est retirée et l'outillage peut être nettoyé en vue d'une nouvelle opération de fabrication.

Le piston de la technique antérieure, pour l'injection de résine dans l'outillage, est ici remplacé par le contre-moule supérieur qui applique une pression et permet l'imprégnation de la préforme avec la résine. La résine reste ainsi sous pression constante et permanente pendant sa polymérisation, ce qui permet d'éviter toute porosité dans la pièce.

L'invention peut permettre d'apporter plusieurs avantages. Une juste quantité de résine peut être utilisée, ce qui est économique. Lorsque l'on utilise des canalisations (par exemple en cuivre) avec la technique antérieure, l'ensemble est jeté après l'injection car la résine durcit à l'intérieur. Avec l'invention, les canalisations peuvent être supprimées voire significativement raccourcies. On obtient une pièce en matériau composite aux dimensions attendues (moule contre moule) et avec des surfaces lisses (aérodynamiques). On n'utilise pas de fluide pour la mise sous pression, tel que de l'eau ou de l'huile. On peut utiliser des résines encore plus difficiles à injecter, avec des viscosités élevées. On peut éventuellement avoir une pression qui évolue au cours la phase de maintien de la pression (notamment dans le cas de la résine PR520^{®} qui peut être compressible ou avoir son volume qui diminue lorsqu'elle polymérise).

## Revendications

1. Procédé de fabrication d'une pièce par injection de résine (202) dans une préforme (200) en fibres tissées, comprenant les étapes de :
c) mise en forme de la préforme,
d) formage de la préforme, et
e) injection de résine dans la préforme et moulage,
l'étape e) étant réalisée au moyen d'un outillage (100) comportant un moule (102), un contre-moule (106), et des moyens (124) d'injection de résine, dans lequel l'étape e) comprend les sous-étapes de :
e1) ouverture partielle de l'outillage (100), en éloignant le moule du contre-moule ou inversement,
e2) injection de résine (202) dans l'outillage,
e3) fermeture de l'outillage, en rapprochant le moule du contre-moule ou inversement, et
e4) mise sous pression et chauffage de la préforme (200) imprégnée entre le moule (102) et le contre-moule (106).

2. Procédé selon la revendication précédente, dans lequel lesdites étapes c), d) et e) sont réalisées au moyen dudit outillage (100), ledit moule définissant une empreinte configurée pour mettre en œuvre l'étape c), et l'outillage comportant en outre des moyens (122) d'aspiration d'air et d'injection de résine.

3. Procédé selon la revendication 1 ou 2, dans lequel il comprend, avant l'étape c), les étapes de :
a) réalisation de la préforme (200) par tissage de fibres, et
b) mise aux dimensions de la préforme.

4. Procédé selon l'une des revendications 1 à 3, dans lequel l'étape c) comprend les sous-étapes d'humidification de la préforme (200) et de positionnement de la préforme dans l'empreinte (110) du moule (102).

5. Procédé selon l'une des revendications précédentes, dans lequel l'étape d) comprend les sous-étapes de fermeture de l'outillage (100) et de chauffage et mise sous vide de la préforme (200) entre le moule (102) et le contre-moule (106).

6. Procédé selon l'une des revendications précédentes, dans lequel la sous-étape d'ouverture partielle de l'outillage (100) est réalisée en éloignant d'une distance prédéterminée le contre-moule (106) du moule (102), le moule et le contre-moule restant sensiblement emboîtés l'un dans l'autre.

7. Procédé selon l'une des revendications précédentes, dans lequel la résine (202) est injectée à travers un port (124) de l'outillage, et le vide est réalisé par aspiration d'air à travers un autre port (122) de l'outillage.

8. Procédé selon l'une des revendications précédentes, dans lequel lesdites étapes sont réalisées au moyen d'un unique outillage (100).

9. Outillage (100) pour la mise en œuvre du procédé selon l'une des revendications précédentes, l'outillage comprenant :
- deux plateaux (104, 108) chauffants respectivement supérieur et inférieur, le plateau (104) chauffant inférieur étant solidaire d'un moule (102) comportant une empreinte (110) de mise en forme d'une préforme (200) et le plateau (108) chauffant supérieur étant solidaire d'un contre-moule (106) comportant une autre empreinte (112),
- des moyens (118) motorisés de déplacements des plateaux, de préférence dans une direction sensiblement verticale, depuis une position éloignée jusqu'à une position dans laquelle le moule et le contre-moule sont emboîtés l'un dans l'autre, les moyens motorisés étant aptes à appliquer une force (120) de compression aux plateaux en vue de la mise sous pression de la préforme (200) entre les empreintes.

10. Outillage (100) selon la revendication précédente, dans lequel les deux plateaux (104, 108) font partie d'une presse dont le plateau inférieur (104) forme une embase et le plateau supérieur (108) est monté coulissant en direction sensiblement verticale sur des colonnes de guidage (114).

11. Outillage (100) selon la revendication 9 ou 10, dans lequel il comprend des moyens (126) de projection laser des contours de la préforme (200) sur l'empreinte (110) du moule (102).

## Patentansprüche

1. Verfahren zur Herstellung eines Werkstücks durch Einspritzen von Harz (202) in eine Gewebefaservorform (200), umfassend die folgenden Schritte:
c) Formgebung der Vorform,
d) Verformung der Vorform, und
e) Einspritzen von Harz in die Vorform und Formguss, wobei der Schritt e) mithilfe eines Werkzeugs (100) durchgeführt wird, das eine Gussform (102), eine Gegenform (106) und Mittel (124) zum Einspritzen von Harz umfasst, wobei der Schritt e) die folgenden Teilschritte umfasst:
e1) Teilöffnung des Werkzeugs (100), indem die Gussform von der Gegenform entfernt wird oder umgekehrt,
e2) Einspritzung von Harz (202) in das Werkzeug,
e3) Verschluss des Werkzeugs, indem die Gussform an die Gegenform angenähert wird oder umgekehrt, und
e4) Druckbeaufschlagung und Erhitzung der imprägnierten Vorform (200) zwischen der Gussform (102) und der Gegenform (106).

2. Verfahren nach dem vorstehenden Anspruch, wobei die Schritte c), d) und e) mithilfe des Werkzeugs (100) durchgeführt werden, wobei die Gussform einen Abdruck definiert, der ausgebildet ist, um den Schritt c) einzusetzen, und das Werkzeug weiter Mittel (122) zum Absaugen von Luft und zum Einspritzen von Harz umfasst.

3. Verfahren nach Anspruch 1 oder 2, wobei es vor dem Schritt c) die folgenden Schritte umfasst:
a) Bilden der Vorform (200) durch Verweben von Fasern, und
b) Anpassen der Abmessungen der Vorform.

4. Verfahren nach einem der Ansprüche 1 bis 3, wobei der Schritt c) die Teilschritte der Befeuchtung der Vorform (200) und der Positionierung der Vorform im Abdruck (110) der Gussform (102) umfasst.

5. Verfahren nach einem der vorstehenden Ansprüche, wobei der Schritt d) die Teilschritte des Verschlusses des Werkzeugs (100) und der Erhitzung und Vakuumbildung der Vorform (200) zwischen der Gussform (102) und der Gegenform (106) umfasst.

6. Verfahren nach einem der vorstehenden Ansprüche, wobei der Teilschritt der Teilöffnung des Werkzeugs (100) durchgeführt wird, indem die Gegenform (106) um einen vorbestimmten Abstand von der Gussform (102) entfernt wird, wobei die Gussform und die Gegenform im Wesentlichen ineinandergefügt bleiben.

7. Verfahren nach einem der vorstehenden Ansprüche, wobei das Harz (202) über eine Öffnung (124) des Werkzeugs eingespritzt wird und das Vakuum durch Absaugen von Luft durch eine andere Öffnung (122) des Werkzeugs durchgeführt wird.

8. Verfahren nach einem der vorstehenden Ansprüche, wobei die Schritte mithilfe eines einzigen Werkzeugs (100) durchgeführt werden.

9. Werkzeug (100) zum Einsatz des Verfahrens nach einem der vorstehenden Ansprüche, wobei das Werkzeug Folgendes umfasst:
- zwei Heizplatten (104, 108), eine untere bzw. eine obere, wobei die untere Heizplatte (104) fest mit einer Gussform (102) verbunden ist, die einen Abdruck (110) zur Formgebung einer Vorform (200) umfasst, und die obere Heizplatte (108) fest mit einer Gegenform (106) verbunden ist, die einen anderen Abdruck (112) umfasst,
- motorisierte Mittel (118) zur Verlagerung der Platten, vorzugsweise in einer im Wesentlichen vertikalen Richtung ausgehend von einer beabstandeten Position bis zu einer Position, in der die Gussform und die Gegenform ineinandergefügt sind, wobei die motorisierten Mittel imstande sind, eine Druckkraft (120) auf die Platten im Hinblick auf die Druckbeaufschlagung der Vorform (200) zwischen den Abdrücken anzuwenden.

10. Werkzeug (100) nach dem vorstehenden Anspruch, wobei die zwei Platten (104, 108) Teil einer Presse bilden, bei der die untere Platte (104) einen Sockel bildet und die obere Platte (108) in einer im Wesentlichen vertikalen Richtung auf Führungssäulen (114) verschiebbar angebracht ist.

11. Werkzeug (100) nach Anspruch 9 oder 10, wobei es Mittel (126) zur Laserprojektion der Konturen der Vorform (200) auf dem Abdruck (110) der Gussform (102) umfasst.

## Claims

1. Method for producing a part by injecting resin (202) into a woven fibre preform (200), comprising the steps of:
c) shaping the preform,
d) forming the preform, and
e) injecting resin into the preform and moulding,
step e) being carried out by means of an item of equipment (100) comprising a mould (102), a countermould (106), and means (124) for injecting resin, wherein step e) comprises the substeps of:
e1) partially opening the item of equipment (100), by moving the mould away from the countermould or *vice versa,*
e2) injecting resin (202) into the equipment,
e3) closing the equipment, by bringing the mould closer to the countermould or *vice versa,* and
e4) pressurising and heating the impregnated preform (200) between the mould (102) and the countermould (106).

2. Method according to the preceding claim, wherein said steps c), d) and e) are carried out by means of said equipment (100), said mould defining a cavity configured to implement the step c), and the equipment further comprising means (122) for suctioning air and injecting resin.

3. Method according to claim 1 or 2, wherein it comprises, before the step c), the steps of:
a) producing the preform (200) by weaving fibres, and
b) sizing the preform.

4. Method according to one of claims 1 to 3, wherein the step c) comprises the substeps of humidifying the preform (200) and positioning the preform in the cavity (110) of the mould (102).

5. Method according to one of the preceding claims, wherein the step d) comprises the substeps of closing the equipment (100) and heating and putting the preform (200) under vacuum between the mould (102) and the countermould (106).

6. Method according to one of the preceding claims, wherein the substep of partially opening the equipment (100) is carried out by extending the countermould (106) by a predetermined distance from the mould (102), the mould and the countermould remaining substantially interlocked with one another.

7. Method according to one of the preceding claims, wherein the resin (202) is injected through a port (124) of the equipment, and the vacuum is produced by suctioning air through another port (122) of the equipment.

8. Method according to one of the preceding claims, wherein said steps are carried out by means of a single item of equipment (100).

9. Equipment (100) for implementing the method according to one of the preceding claims, the equipment comprising:
- two heating plates (104, 108), respectively upper and lower, the lower heating plate (104) being integral with a mould (102) comprising a cavity (110) for shaping a preform (200) and the upper heating plate (108) being integral with a countermould (106) comprising another cavity (112),
- motorised means (118) for moving plates, preferably in a substantially vertical direction, from an extended position to a position wherein the mould and the countermould are interlocked with one another, the motorised means being capable of applying a compression force (120) to the plates in view of pressurising the preform (200) between the cavities.

10. Equipment (100) according to the preceding claim, wherein the two plates (104, 108) form part of a press of which the lower plate (104) forms a base and the upper plate (108) is mounted sliding in a substantially vertical direction on the guiding columns (114).

11. Equipment (100) according to claim 9 or 10, wherein it comprises means for laser projection (126) of the contours of the preform (200) on the cavity (110) of the mould (102).
